# EUROPEAN PATENT SPECIFICATION

(11) **EP 1 403 144 B1**
(45) Date of publication and mention of the grant of the patent: **02.11.2005**
(21) Application number: 02712397.5
(22) Date of filing: 15.02.2002
(51) Int. Cl.: B60R 16/02, B60R 16/04

(54) **ATTACHING STRUCTURE FOR DEVICES FOR VEHICLES**
BEFESTIGUNGSKONSTRUKTION FÜR VORRICHTUNGEN FÜR FAHRZEUGE
STRUCTURE DE FIXATION DESTINEE A DES DISPOSITIFS DE VEHICULES

(30) Priority: 13.06.2001 JP 2001178218
(43) Date of publication of application: 31.03.2004
(60) Divisional application: 05006935.0
(73) Proprietor: HONDA GIKEN KOGYO KABUSHIKI KAISHA, Minato-ku, Tokyo 107-8556 (JP)
(72) Inventor: OBAMA, Norihiro, c/o KK. Honda Gijutsu Kenkyusho, Wako-shi, Saitama 351-0193 (JP); SATO, Takahiro, c/o KK. Honda Gijutsu Kenkyusho, Wako-shi, Saitama 351-0193 (JP); NAKAMURA, Satoshi, c/o KK. Honda Gijutsu Kenkyusho, Wako-shi, Saitama 351-0193 (JP)
(74) Representative: Piésold, Alexander James
(86) International application number: PCT/JP2002/001318
(87) International publication number: WO 2003/002379

(56) References cited:
- EP-A- 1 182 093
- DE-A- 4 331 900
- DE-C- 19 651 495
- JP-A- 8 192 639
- JP-A- 49 092 713
- US-A- 5 542 491

## Description

The present invention relates to a structure mounting a device for a vehicle, in which the device for the vehicle is mounted to vehicle body through a mounting portion according to the preamble of claim 1, see e.g. US-A-5 542 491.

Various devices for a vehicle are disposed in an engine room in the vehicle. However, if the device for the vehicle are firmly fixed to the vehicle body, the crash stroke of the vehicle may be reduced due to the device for the vehicle upon collision of the vehicle and hence, the shock absorbing effect may be reduced in some cases. If the device comprising an electric equipment is damaged due to the shock of the collision, there is a possibility that an influence might be exerted to the function of another electric equipment by the breakage of a wire or the short-circuit.

Japanese Patent Application Laid-open No. 6-270697 (US-A-5 476 151) discloses a mounting structure in which devices for a vehicle such as an inverter of a motor for traveling an electric vehicle, an auxiliary battery and an inverter for an air conditioner are disposed in a longitudinal direction of a vehicle body and connected together by a link inclined obliquely with respect to the longitudinal direction. With this arrangement, when a shock is applied to the vehicle body from front upon collision of the vehicle, the central auxiliary battery is moved upwards by the function of the link, and the inverters located in front and rear of the auxiliary battery are moved downwards. Therefore, it is possible to prevent the devices for the vehicle from interfering with one another, thereby ensuring a crash stroke for the vehicle to effectively absorb the shock of the collision and to prevent the damage to the devices for the vehicle. Further, the above-described publication also discloses a structure in which an engaging portion and an engaged portion are provided on a front hood and a device for the vehicle, so that when the front hood pushed from front upon collision of the vehicle is bent upwards, the engaging portion of the front hood and the engaged portion of the device for the vehicle are brought into engagement with each other, whereby the device for the vehicle is pulled upwards to ensure a crash stroke for the vehicle body.

In addition, Japanese Patent Application Laid-open No.10-23637 discloses a structure in which a casing for accommodation of a device for the vehicle comprising a junction box for branching and connecting a wire harness is comprised of a main body having a V-shaped groove extending in a lateral direction of the vehicle body and a lid for covering an opening in an upper surface of the main body. With this arrangement, when a shock is applied to the vehicle body from front upon collision of the vehicle, the main body of the casing is smashed at the V-shaped groove to absorb the shock and further, the lid is separated upwards from the main body to absorb the shock, whereby the damage to the junction box can be prevented.

In the structure described in Japanese Patent Application Laid-open No. 6-270697, it is necessary to connect the plurality of devices for the vehicle to one another by the link and for this reason, the number of parts is increased to cause an increase in cost, and moreover, when the shock of the collision is deviated from a presumed direction, there is a possibility that the link might not exhibit its sufficient function. In the structure in which the engaging portion of the front hood and the engaged portion of the device for the vehicle are brought into engagement with each other, whereby the device for the vehicle is pulled upwards, it is required that the engaging portion be provided at a fore location on the front hood, resulting in a problem that it is difficult for the structure to be applied to a device for the vehicle disposed at a rear location.

In the structure described in Japanese Patent Application Laid-open No. 10-23637, it is necessary to design the casing at a large size in consideration of a smashing margin upon the collision in order to effectively protect the junction box and hence, the casing is remarkably large in size, as compared with the size of the junction box, which is inconvenient in respect of a space efficiency.

US 5,542,491 discloses a scuttle structure for a drive unit of a motor vehicle including a scuttle for the drive unit with a slide down aid fastened to the scuttle in such a way that shearing stress caused by a collision causes part of the slide down aid to slid down on the scuttle, thereby avoiding intrusion of parts of the drive unit into the scuttle, and assisting the sliding-down action of the drive unit.

DE 19651495 discloses car bodywork including an end face wall separating the engine cavity from the passenger compartment. A box for accommodating control mechanisms has one wall fixed to the end face wall, and an opposite wall supported by a bodywork part in such a way that in a crash the support point is moved upward to raise the box.

The present invention has been accomplished with the above circumstances in view, and it is an object of the at least preferred embodiments of the present invention to prevent the shock absorbing effect from being reduced due to the interference of the devices for the vehicle with one another upon collision of the vehicle and to suppress the damage to the devices for the vehicle to the minimum.

According to a first aspect and feature of the present invention defined by claim 1, there is provided a structure mounting a device for a vehicle, in which the device for the vehicle is mounted to a vehicle body through a mounting portion;
wherein a deformable member deformable into a predetermined shape by a load upon collision of the vehicle is mounted to the vehicle body, so that the device for the vehicle is pushed and moved in a predetermined direction-by the deformation of the deformable member, and the device for the vehicle is mounted to the vehicle body through the mounting portion, so that the mounting portion is disengaged by the movement of the device in the predetermined direction upon collision of the vehicle, whereby the device is separated from the vehicle body;
characterised in that the mounting portion has a plug-in structure and in that the deformable member is a plate-shaped member having a bent portion, said bent portion being deformed by a load upon the collision of the vehicle.

With the above arrangement, when the deformable member is deformed into the predetermined shape by the load upon collision of the vehicle, the device for the vehicle mounted to the vehicle body is pushed and moved in the predetermined direction by the deformable member. Therefore, it is possible to prevent another member moved by the shock of the collision and the device for the vehicle from interfering with each other to enhance the shock absorbing performance, and further to suppress the damage to the device for the vehicle to the minimum.

Additionally when the device for the vehicle is moved in the predetermined direction by the load upon collision of the vehicle, the mounting portion is disengaged, whereby the restraint of the device for the vehicle is released. Therefore, it is possible to further effectively prevent the interference of the device for the vehicle and another member with each other and the damage to the device for the vehicle.

Further, the deformable member is the plate-shaped member having the bent portion and hence can be reliably bent by the load upon collision of the vehicle.

According to a second aspect and feature of the present invention, in addition to the first feature, the device for the vehicle is mounted to the vehicle body through the mounting portion, and the mounting portion is of a structure in which the coupling of respective parts thereof is released when the amount of deformable member deformed reaches a predetermined value or more.

With the above arrangement, the coupling of the mounting portion for mounting the device for the vehicle to the vehicle body is released when the amount of deformable member deformed reaches the predetermined value or more. Therefore, when a shock of a certain degree or more is generated, the mounting portion can be disengaged to reliably release the restraint of the device for the vehicle.

According to a third aspect and feature of the present inventi on, in addition to the first or second feature, at least a portion of the deformable member when mounted is fixed to a damper housing.

With the above arrangement, at least a portion of the deformable member is fixed to the damper housing having a high rigidity and hence, the load upon collision of the vehicle can be applied effectively to the deformable member to reliably deform the deformable member.

According to a fourth aspect and feature of the present invention, in addition to the third feature, the deformable member comprises a first plate-shaped portion extending forwards from a front surface of the damper housing, and a second plate-shaped portion extending obliquely rearwards from an upper surface of a wheel house, the first and second plate-shaped portions being integrally coupled to each other at the bent portion, and the bent portion is located on a lower surface of the device for the vehicle.

With the above arrangement, the deformable member has such a configuration that the first plate-shaped portion extending forwards from the front surface of the damper housing and the second plate-shaped portion extending obliquely rearwards from the upper surface of the wheel house are integrally coupled to each other at the bent portion. Therefore, when the wheel house having a relatively low rigidity is deformed rearwards due to the shock upon the collision of the vehicle, the deformable member is compressed between the wheel house and the damper housing having a relatively high rigidity, whereby the first and second plate-shaped portions thereof are bent upwards at the bent portion. Therefore, the device for the vehicle can be pushed upwards and moved reliably by the bent portion of the deformable member.

According to a fifth aspect and feature of the present invention, in addition to any of the first to fourth features, the device for the vehicle is electric equipment, and a wire harness leading to the electric equipment is supported loosely on the vehicle body.

With the above arrangement, the wire harness leading to the electric equipment as a device for the vehicle is supported with the looseness on the vehicle body and hence, the movement of the device for the vehicle cannot be hindered by the wire hamess.

According to a sixth aspect and feature of the present invention, in addition to any of the first to fifth features, the structure includes a hood which is bent upwards at a predetermined location by the load upon collision of the vehicle, so that the device for the vehicle is moved toward a space defined by the bending of the hood.

With the above arrangement, the hood is bent upwards at the predetermined location by the load upon collision of the vehicle and hence, the movement of the device for the vehicle can be prevented from being hindered due to the interference with the hood, by moving the device for the vehicle toward the defined by the bending of the hood.

A wheel house/damper housing 12 in an embodiment corresponds to the vehicle body of the present invention; a relay box 23 in the embodiment corresponds to the device for the vehicle of the present invention; a bracket 26 and clips 29 in the embodiment correspond to the mounting portions of the present invention; and a bonnet hood 33 in the embodiment corresponds to the hood of the present invention.

Preferred embodiments of the present invention will now be described by way of example and with reference to the accompanying drawings in which:
Figs.1 to 7 show an embodiment of the present invention.
   Fig. 1 is aperspective view of an engine room in a vehicle;
   Fig. 2 is an enlarged view taken in the direction of an arrow 2 in Fig. 1;
   Fig. 3 is a view showing a state with a relay box removed from Fig. 2;
   Fig. 4 is a view taken in the direction of an arrow 4 in Fig. 2;
   Fig. 5 is a view taken in the direction of an arrow 5 in Fig. 2;
   Fig. 6 is a view taken along a line 6-6 in Fig. 4; and
   Fig. 7 is a sectional view taken along a line 7-7 in Fig. 6.

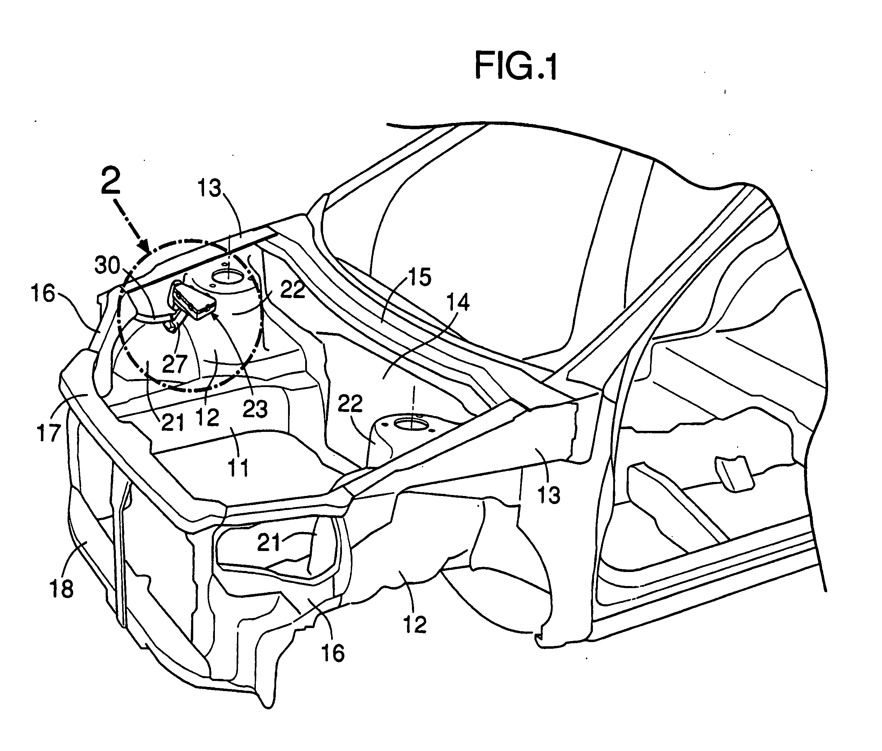

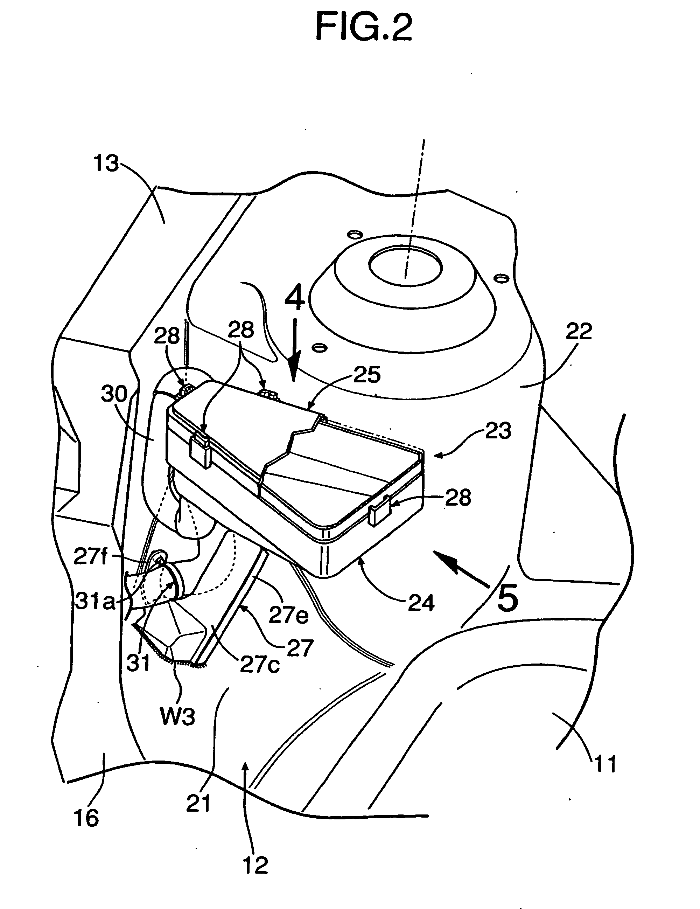

As shown in Figs. 1 to 3, an engine room in a four-wheel vehicle includes a pair of left and right front side frames 11, 11, a pair of left and right wheel house/damper housings 12, 12 welded to outer side surfaces of the front side frames 11, 11, a pair of left and right wheel house upper members 13, 13 welded to upper surfaces of the wheel house/damper housings 12, 12, a dash board 14 welded between rear ends of the wheel house/damper housings 12, 12, a window shield lower 15 welded to an upper surface of the dash board 14, a pair of left and right front side bulk heads 16, 16 welded to front ends of the wheel house/damper housings 12, 12, a bulk head upper center frame 17 welded between front ends of upper portions of the front side bulk heads 16, 16, and a front lower cross-member 18 welded between front ends of lower portions of the front side bulk heads 16, 16.

The right wheel house/damper housing 12 is integrally provided with a front wheel house 21 and a rear damper housing 22, and a relay box 23 as a device for the vehicle is supported in a space facing an upper surface of the wheel house 21 and a front surface of the damper housing 22. The relay box 23 is of a trapezoidal shape as viewed in a plane and divided into two portions: a main body 24 provided at a lower location and a lid 25 provided at an upper location.

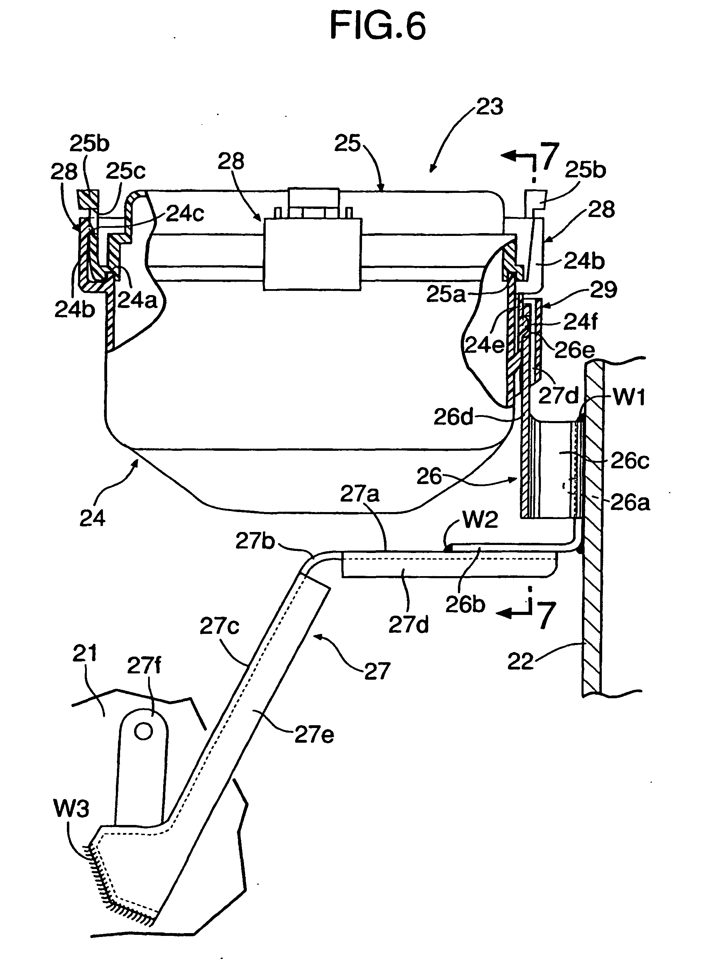

As can be seen by referring also to Fig.6, a bracket 26 for supporting relay box 23 on the front surface of the damper housing 11 is made by pressing a metal plate, and integrally provided with a mounting portion 26a welded at W1 to the front surface of the damper housing 22, a connecting portion 26b extending forwards from a lower edge of the mounting portion 26a, a pair of arm portions 26c, 26c extending forwards from left and right side edges of the mounting portion 26a, and a pair of supporting portions 26d, 26d extending in a lateral direction from the arm portions 26c, 26c. Quadrilateral locking bores 26e, 26e are defined in ends of the supporting portions 26d, 26d.

A deformable member 27 formed into a spread inverted V-shape as viewed from a side is made by pressing a metal plate, and includes a first plate-shaped portion 27a superposed at its rear portion on a lower surface of the connecting portion 26b of the bracket 26 and welded at W2 thereto, and a second plate-shaped portion 27c which is integrally connected to a tip end of the first plate section 27a through a bent portion 27b and extends forwards and downwards and is welded at its front end at W3 to the upper surface of the wheel house 21. Reinforcing flanges 27d, 27d and 27e, 27e are integrally formed at opposite side edges of the first and second plate-shaped portions 27a and 27c.

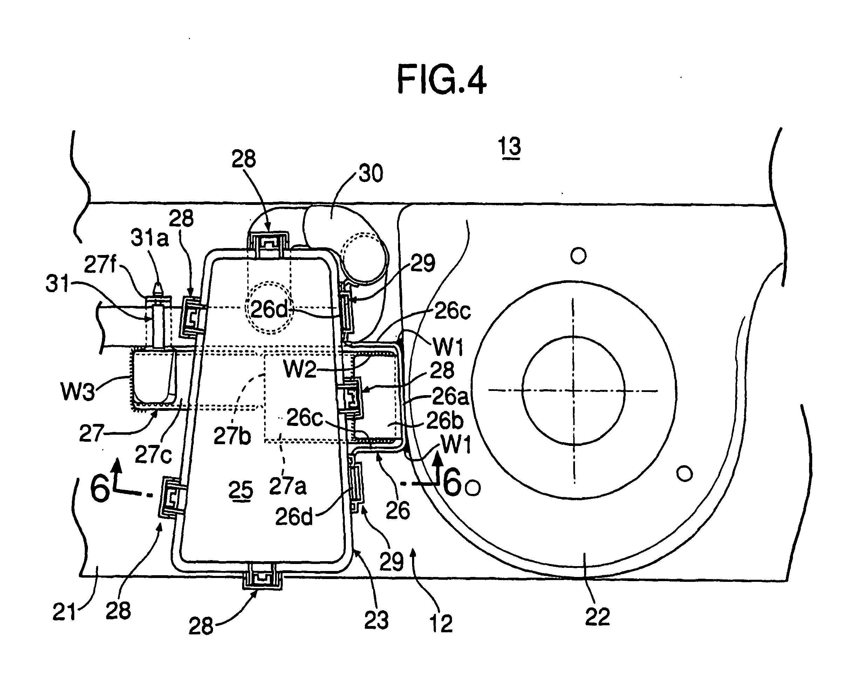

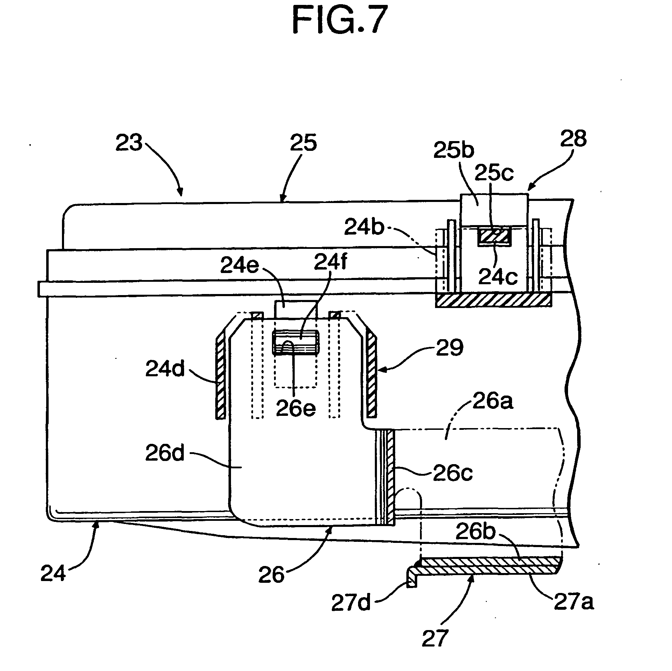

As can be seen from Figs.4, 6 and 7, the relay box 23 includes a rib 24a at an upper edge of the main body 24, which opens upwards, and a groove 25a in a lower end of the lid 25, which opens downwards. The body 24 and the lid 25 are integrally connected to each other by five clips 28 with the rib 24a fitted in the groove 25a. The five clips 28 are of the same structure. A locking claw 24c is provided at an upper end of a plate-shaped portion 24b having a high rigidity and extending upwards from a side of the main body 24, while a locking bore 25c is provided in an upper end of a plate-shaped portion 25b having a low rigidity and extending upwards from a side of the lid 25. Therefore, when the lid 25 is fitted into the main body 24 from above, the plate-shaped portion 25b of the lid 25 pushed by the locking claw 24c of the main body 24 is flexed inwards, whereby the locking claw 24c of the main body 24 is engaged into the locking bore 25c in the lid 25. To separate the lid 25 from the main body 24, the plate-shaped portion 25b of the lid 25 may be flexed inwards, thereby permitting the locking claw 24c to be disengaged from the locking bore 25c, and in that state, the lid 25 may be withdrawn upwards.

Each of two clips 29 for releasably supporting the relay box 23 on the supporting portions 26d, 26d of the bracket 26 is of such a structure that a plate 24e supported at its lower portion and flexible at its upper portion is disposed within a guide portion 24d projectingly provided on a side of the main body 24 of the relay box 23 to extend up and down, and a locking claw 24f is provided on an outer side surface of the plate 24e. Therefore, when each of the supporting portion 26d of the bracket 26 is inserted into the guide portion 24d of the clip 29 from below, the plate 24e is flexed, thereby permitting the locking claw 24f to be engaged into the locking bore 26e and thus, the relay box 23 is supported on the supporting portions 26d, 26d of the bracket 26 (see Figs. 4 and 6). In this state, the bent portion 27b of the deformable member 27 is opposed to the central portion of the lower surface of the main body 24 of the relay box 23 (see Fig.6).

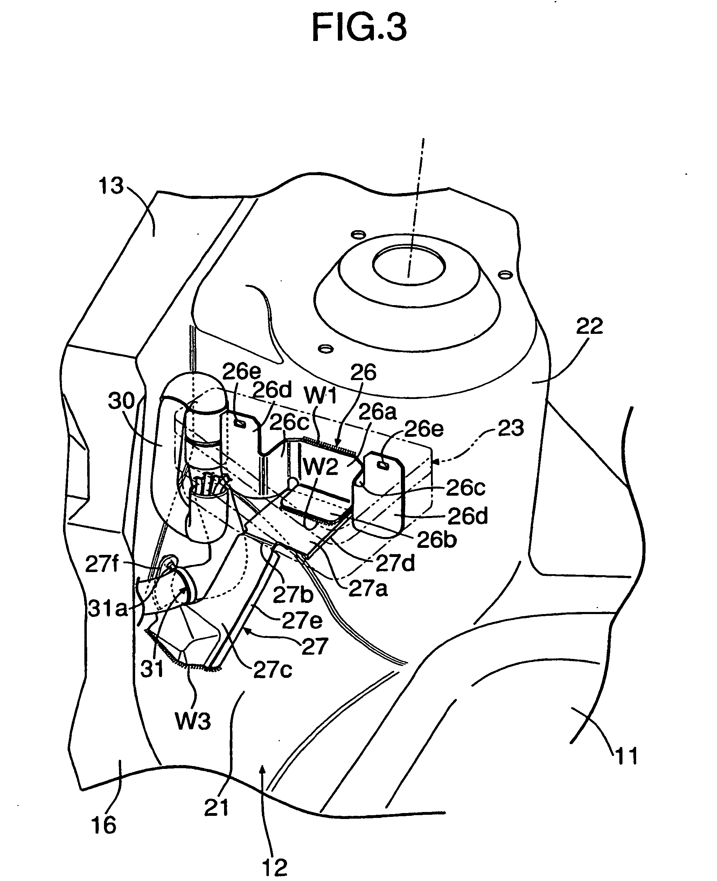

As can be seen from Fig.3, a wire harness 30 leading to the relay body 23 once extends downwards to describe a loop of 360°, and is then fixed by locking a locking claw 31a integral with a ring 31 fitted around an outer periphery of the wire harness 30 to a mounting portion 27f extending from the second plate-shaped portion 27c of the deformable member 27.

The operation of the present embodiment having the above-described arrangement will be described below.

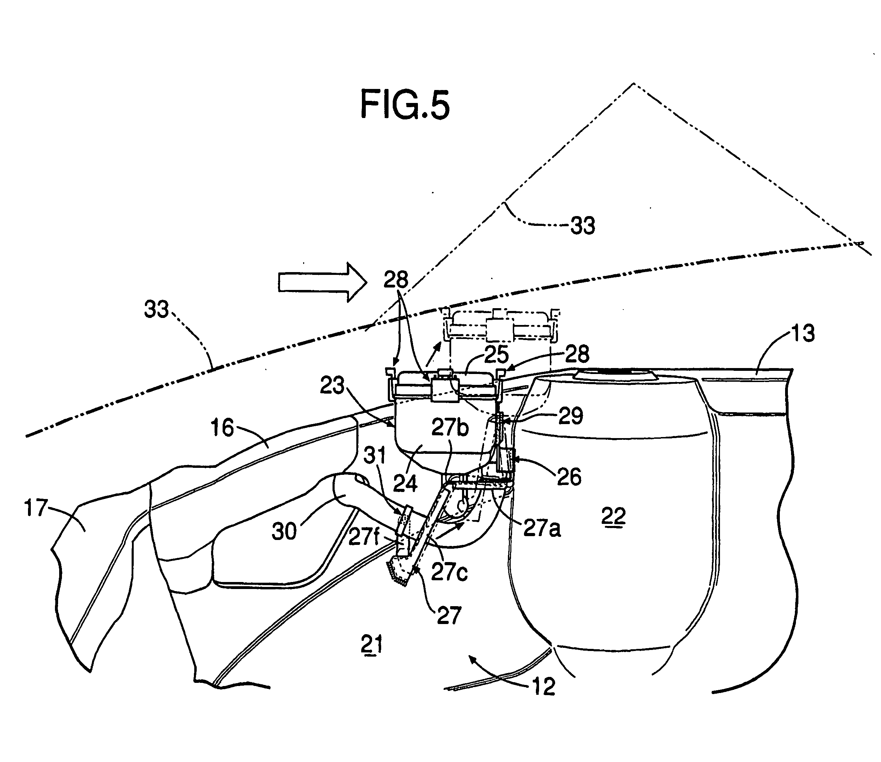

When the collision of the vehicle occurs, members such as the bulk head upper center frame 17, the front lower cross-member 18, the front side bulk heads 16, 16, the front side frames 11, 11, the wheel house/damper housing 12, 12 and the wheel house upper members 13, 13 are smashed rearwards by the action of a shock from front. In the right wheel house/damper housing 12, because the rigidity of the damper housing 22 positioned at a rear location is relatively high and the rigidity of the wheel house 21 positioned at a fore location is relatively low, the wheel house 21 is moved rearwards toward the damper housing 22. At this time, the deformable member 27 is bent at the central bent portion 27b to become deformed into an inverted V-shape as shown by a dashed line in Fig. 5, because the rear end of the first plate-shaped portion 27a of the deformable member 27 is welded at W2 to the bracket 26 welded at W1 to the front surface of the damper housing 22, so that the position is hard to change, and the front end of the second plate-shaped portion 27c of the deformable member 27 is welded at W3 to the upper surface of the wheel house 21, so that the position is liable to be changed rearwards.

When the deformable member 27 is deformed into the inverted V-shape in the above manner, the relay box 23 with the central portion of the lower surface of the main body 24 pushed up by the bent portion 27b is moved upwards. When the relay box 23 is pushed upwards by a predetermined distance, the locking claws 24f, 24f of the two clips 29 provided on the main body 24 of the relay box 23 are forcibly disengaged from the locking bores 26e, 26e provided in the supporting portion 26d, 26d of the bracket 26 and thus, the relay box 23 is separated upwards from the bracket 26.

At this time, a bonnet hood 33 covering the engine room is bent upwards at a portion corresponding to above the relay box 23, whereby a space for removal of the relay box 23 is ensured in the bent location, because a stiffener for reinforcing a rear surface of the bonnet hood 33 is disposed at a predetermined location and in a predetermined shape. Thus, the relay box 23 existing in front of the damper housing 22 of the relatively high rigidity at the rear portion of the wheel house/damper housing 12 can be moved upwards and moreover, the relay box 23 disengaged from the bracket 26 can be moved freely rearwards along the upper surface of the damper housing and hence, a sufficient crush stroke can be ensured in the engine room to absorb a shock due to the collision. At this time, the upward movement of the relay box 23 cannot be hindered by the wire harness 30, because the wire harness 30 leading to the relay box 23 is disposed with a looseness.

Upon the collision of the vehicle, the relay box 23 is retracted upwards, whereby it is difficult for the relay box to be damaged, and it is possible to inhibit, to the minimum, the breakage of a wire and/or the short-circuit from occurring within the relay box 23 to influence another electric equipment.

Although the embodiment of the present invention has been described in detail, it will be understood that various modifications in design may be made without departing from the subject matter of the present invention defined in claims.

For example, the deformable member 27 has been mounted to the wheel house/damper housing 12 in the embodiment, but may be mounted to any other member.

The relay box 23 has been illustrated as a device for the vehicle in the embodiment, but the present invention is applicable to any device for a vehicle other than the relay box 23.

The bracket 26 and the clips 29 have been illustrated as a mounting portion of the plug-in structure in the embodiment, but according to the present invention, any mounting portions of a plug-in structure other than them may be employed.

The structure within the engine room has been described in the embodiment, but the present invention is applicable to a structure within a trunk room. In this case, the hood is a trunk hood rather than the bonnet hood 33.

### INDUSTRIAL APPLICABILITY

As discussed above, the structure of mounting of the device for the vehicle according to the present invention can be suitably utilized when the device such as the relay box is mounted in the engine room in the four-wheel vehicle.

## Claims

1. A structure mounting a device for a vehicle, the structure comprising a deformable member (27) and a mounting portion (26; 29) in which the device (23) for the vehicle is mounted to a vehicle body (12) through said mounting portion (26, 29),
wherein said deformable member (27) deformable into a predetermined shape by a load upon collision of the vehicle is mounted to the vehicle body (12), so that the device (23) for the vehicle is pushed and moved in a predetermined direction by the deformation of the deformable member (27), and the device (23) for the vehicle is mounted to the vehicle body (12) through the mounting portion (26; 29), so that the mounting portion (26, 29) is disengaged by the movement of the device (23) in the predetermined direction upon collision of the vehicle, whereby the device (23) is separated from the vehicle body (12)
**characterised in that** the mounting portion has a plug-in structure and **in that** the deformable member (27) is a plate-shaped member having a bent portion (27b), said bent portion (27b) being deformed by a load upon the collision of the vehicle.

2. A structure mounting a device for a vehicle according to claim 1, wherein the mounting portion(26, 29) is of a structure in which the coupling of respective parts thereof is released when the amount of deformable member (27) deformed reaches a predetermined value or more.

3. A structure mounting a device for a vehicle according to claim 1 or 2, wherein at least a portion of the deformable member (27) when mounted is fixed to a damper housing (22).

4. A structure mounting a device for a vehicle according to claim 3, wherein the deformable member (27) comprises a first plate-shaped portion (27a) extending forwards from a front surface of the damper housing (22), and a second plate-shaped portion (27c) extending obliquely rearwards from an upper surface of a wheel house (21), said first and second plate-shaped portions (27b and 27c) being integrally coupled to each other at the bent portion (27b), and said bent portion (27b) is located on a lower surface of the device (23) for the vehicle.

5. In combination, a structure mounting a device for a vehicle according to any one of claims 1 to 4 and a device (23), wherein the device (23) for the vehicle is electric equipment, and a wire harness (30) leading to said electric equipment is supported loosely on the vehicle body (12).

6. In combination, a structure mounting a device for a vehicle according to any one of claims 1 to 5, and a hood, wherein the hood (33) is bent upwards at a predetermined location by the load upon collision of the vehicle, so that the device (23) for the vehicle is moved toward a space defined by the bending of said hood (33).

## Patentansprüche

1. Stuktur, welche eine Vorrichtung für ein Fahrzeug hält, wobei die Struktur ein verformbares Element (27) und einen Anbringungsabschnitt (26; 29) umfasst, bei welcher die Vorrichtung (23) für das Fahrzeug an einen Fahrzeugkörper (12) durch den Anbringungsabschnitt (26; 29) angebracht ist,
wobei das verformbare Element (27), welches durch eine Last bei einer Kollision des Fahrzeugs in eine vorbestimmte Form verformbar ist, derart an den Fahrzeugkörper (12) angebracht ist, dass die Vorrichtung (23) für das Fahrzeug durch die Verformung des verformbaren Elements (27) in eine vorbestimmte Richtung geschoben und bewegt wird, und die Vorrichtung (23) für das Fahrzeug durch den Anbringungsabschnitt (26; 29) derart an dem Fahrzeugkörper (12) angebracht ist, dass der Anbringungsabschnitt (26; 29) bei einer Kollision des Fahrzeugs durch die Bewegung der Vorrichtung (23) in der vorbestimmten Richtung gelöst wird, wodurch die Vorrichtung (23) von dem Fahrzeugkörper (12) getrennt wird,
**dadurch gekennzeichnet, dass** der Anbringungsabschnitt eine Einsteckstruktur aufweist und dass das verformbare Element (27) ein plattenförmiges Element mit einem gekrümmten Abschnitt (27b) ist, wobei der gekrümmte Abschnitt (27b) bei der Kollision des Fahrzeugs durch eine Last verformt wird.

2. Struktur, welche eine Vorrichtung für ein Fahrzeug hält, nach Anspruch 1, wobei der Anbringungsabschnitt (26; 29) eine Struktur aufweist, bei welcher das Koppeln jeweiliger Teile derselben dann gelöst wird, wenn der Betrag der Verformung des verformbaren Elements (27) einen vorbestimmten Wert oder darüber erreicht.

3. Struktur, welche eine Vorrichtung für ein Fahrzeug hält, nach Anspruch 1 oder 2, wobei wenigstens ein Abschnitt des verformbaren Elements (27), wenn es angebracht ist, an einem Dämpfergehäuse (22) befestigt ist.

4. Struktur, welche eine Vorrichtung für ein Fahrzeug hält, nach Anspruch 3, wobei das verformbare Element (27) einen ersten plattenförmigen Abschnitt (27a) umfasst, welcher von einer vorderen Fläche des Dämpfergehäuses (22) aus nach vorne verläuft, und einen zweiten plattenförmigen Abschnitt (27c) umfasst, welcher von einer oberen Fläche eines Radgehäuses (21) aus schräg nach hinten verläuft, wobei der erste und der zweite plattenförmige Abschnitt (27b und 27c) integral miteinander an dem gekrümmten Abschnitt (27b) gekoppelt sind und der gekrümmte Abschnitt (27b) an einer unteren Fläche der Vorrichtung (23) für das Fahrzeug angeordnet ist.

5. Kombination aus einer Struktur, welche eine Vorrichtung für ein Fahrzeug hält, nach einem der Ansprüche 1 bis 4, und einer Vorrichtung (23), wobei die Vorrichtung (23) für das Fahrzeug eine elektrische Ausstattung ist, und ein Kabelbaum (30), welcher zu der elektrischen Ausstattung führt, an einem Fahrzeugkörper (12) lose gelagert ist.

6. Kombination aus einer Struktur, welche eine Vorrichtung für ein Fahrzeug hält, nach einem der Ansprüche 1 bis 5, und einer Haube, wobei die Haube (33) bei einer vorbestimmten Stelle durch die Last bei einer Kollision des Fahrzeugs nach oben gebogen wird, sodass die Vorrichtung (23) für das Fahrzeug zu einem Raum hin bewegt wird, welcher durch das Biegen der Haube (33) definiert ist.

## Revendications

1. Structure de montage d'un dispositif pour un véhicule, la structure comprenant un élément déformable (27) et une partie de montage (26, 29), dans laquelle le dispositif (23) pour le véhicule est monté sur une caisse de véhicule (12) par l'intermédiaire de ladite partie de montage (26, 29),
dans laquelle ledit élément déformable (27) déformable dans une forme prédéterminée par une charge en cas de collision du véhicule est monté sur la caisse de véhicule (12), afin que le dispositif (23) pour le véhicule soit poussé et déplacé dans une direction prédéterminée par la déformation de l'élément déformable (27), et le dispositif (23) pour le véhicule est monté sur la caisse de véhicule (12) par l'intermédiaire de la partie de montage (26, 29), de sorte que la partie de montage (26, 29) est dégagée par le mouvement du dispositif (23) dans la direction prédéterminée en cas de collision du véhicule, de sorte que le dispositif (23) est séparé de la caisse de véhicule (12),
**caractérisée en ce que** la partie de montage a une structure enfichable et **en ce que** l'élément déformable (27) est un élément en forme de plaque ayant une partie pliée (27b), ladite partie pliée (27b) étant déformée par une charge en cas de collision du véhicule.

2. Structure de montage d'un dispositif pour un véhicule selon la revendication 1, dans laquelle la partie de montage (26, 29) est d'une structure dans laquelle l'accouplement de parties respectives de celle-ci est libéré lorsque la quantité d'élément déformable (27) déformé atteint une valeur prédéterminée ou plus.

3. Structure de montage d'un dispositif pour un véhicule selon la revendication 1 ou 2, dans laquelle au moins une partie de l'élément déformable (27), lorsqu'il est monté, est fixée à un boîtier amortisseur (22).

4. Structure de montage d'un dispositif pour un véhicule selon la revendication 3, dans laquelle l'élément déformable (27) comprend une première partie en forme de plaque (27a) s'étendant vers l'avant depuis une surface avant du boîtier amortisseur (22), et une seconde partie en forme de plaque (27c) s'étendant obliquement vers l'arrière depuis une surface supérieure d'un passage de roue (21), lesdites première et seconde parties en forme de plaque (27b et 27c) étant intégralement couplées l'une à l'autre dans la partie pliée (27b), et ladite partie pliée (27b) est située sur une surface inférieure du dispositif (23) pour le véhicule.

5. En combinaison, une structure de montage d'un dispositif pour un véhicule selon l'une quelconque des revendications 1 à 4 et un dispositif (23), dans lesquels le dispositif (23) pour le véhicule est un équipement électrique, et un faisceau de câbles (30) conduisant audit équipement électrique est supporté avec du jeu sur la caisse de véhicule (12).

6. En combinaison, une structure de montage d'un dispositif pour un véhicule selon l'une quelconque des revendications 1 à 5 et un capot, dans lesquels le capot (33) est plié vers le haut à un emplacement prédéterminé par la charge en cas de collision du véhicule, de sorte que le dispositif (23) pour le véhicule est déplacé vers un espace défini par le pliage dudit capot (33).
